Europäisches Patentamt

European Patent Office

Office européen des brevets

(11) Publication number: **0 164 601**
**B1**

(12) **EUROPEAN PATENT SPECIFICATION**

(45) Date of publication of patent specification: **02.08.89**

(21) Application number: **85105963.4**

(22) Date of filing: **14.05.85**

(51) Int. Cl.⁴: **B 60 R 13/06**

(54) **Automotive door glass run.**

(30) Priority: **15.05.84 JP 71592/84 u**

(43) Date of publication of application:
**18.12.85 Bulletin 85/51**

(45) Publication of the grant of the patent:
**02.08.89 Bulletin 89/31**

(84) Designated Contracting States:
**DE FR GB IT**

(56) References cited:
**EP-A-0 040 587**
**DE-A-2 339 899**
**DE-A-2 827 372**
**DE-A-3 140 140**

(73) Proprietor: **TOYODA GOSEI CO., LTD.**
**1, Aza-Nagahata Ohaza-Ochiai Haruhimura**
**Nishikasugai-gun Aichi-ken (JP)**
(73) Proprietor: **TOYOTA JIDOSHA KABUSHIKI**
**KAISHA**
**1, Toyota-cho Toyota-shi**
**Aichi-ken 471 (JP)**

(72) Inventor: **Shibasaki, Jun**
**72, Aza-Saheijimae Kariyasuka Yamato-cho**
**Ichinomiya-shi Aichi-ken (JP)**
Inventor: **Kisanuki, Hisayuki**
**2-2-4, 2, Aza-Mushimatsuri Nishimido**
**Hagiwara-cho Ichinomiya-shi Aichi-ken (JP)**
Inventor: **Nozaki, Masahiro**
**6-1-1, Fujigaoka**
**Kounan-shi Aichi-ken (JP)**
Inventor: **Midooka, Masanori**
**9-26, 2-chome, Syomyoji**
**Inazawa-shi Aichi-ken (JP)**
Inventor: **Okumura, Katsuhiro**
**6-1-49, Suigencho**
**Toyoda-shi Aichi-ken (JP)**
Inventor: **Miura, Shuji**
**52-6, Aza-Yamanokami Hosokawa-cho**
**Okazaki-shi Aichi-ken (JP)**

EP 0 164 601 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 164 601 B1**

(74) Representative: Grams, Klaus Dieter, Dipl.-Ing.
et al
Patentanwaltsbüro Tiedtke-Bühling-Kinne-
Grupe-Pellmann-Grams-Struif Winter-Roth
Bavariaring 4
D-8000 München 2 (DE)

## Description

### Background of the invention
### Field of the invention

The present invention relates to a door glass run for automobiles as described in the precharacterizing part of claim 1.

### Description of the prior art

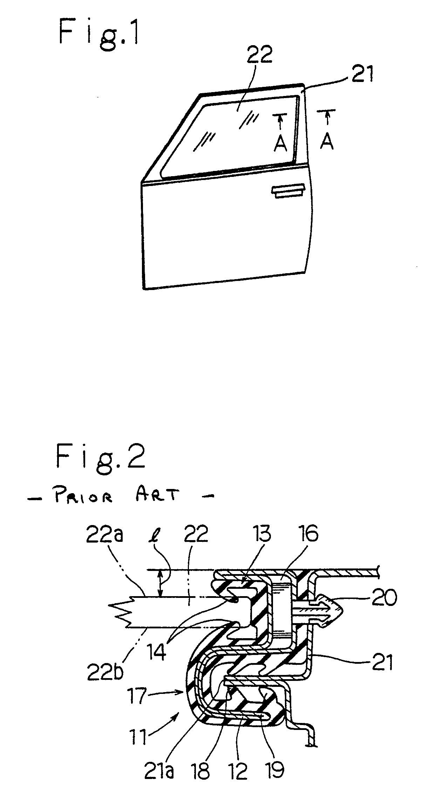

As shown in Fig. 1, a door glass 22 fitted in a door sash 21 and made vertically movable is desired to be as generally flush as possible with the outer face of the door, i.e., the outer surface of the door sash 21 from the standpoint of improving the design when it is shut and reducing the air resistance and noises while it is running at a high speed. In order to satisfy that desire, there has been proposed a door glass run 11 of the above type, as shown in Fig. 2 (Reference should be made to EP—A—0 040 587 and DE—A—3 140 140. As shown, the door glass run 11 is constructed to have a reversed S-shaped section which is reinforced by means of an insert 12. When the door glass run 11 is to be mounted in the door sash 21, its portion 13 positioned outside of the automobile is formed with a pair of glass holding lips 14 which are directed into a U-shaped groove thereof, and its mounting base 17 positioned inside of the automobile is formed with two pairs of flange clamping lips 18 and 19 which are directed into a U-shaped groove thereof. The door glass run 11 thus constructed is mounted in the door sash 21 such that a flange 21a is clamped by the mounting base 17. To improve its position the bottom of the glass run portion 13 may be positioned in the door sash 21 by means of a clip 20 which is fitted in a stepped groove 16 formed in the insert 12 in the longitudinal direction. The reason why the clip 20 should be used is deduced from the fact that the clamping lips 18 and 19 of the mounting base 17 are so flexible that the mounting position of the glass run portion 13 may possibly be dispersed and/or that the position of the glass run portion 13 may possibly be fluctuated easily by an external force such as the suction of the glass during the high-speed run.

As has been described above, the door glass run thus constructed can reduce the distance l between the outer surface of the door sash 21 and an outer glass face 22a to improve the aforementioned design and reduce the aforementioned air resistance and noises. As shown, however, the door glass run has a complicated profile (especially of the insert) to invite an undesirable increase in the number of production steps and requires an auxiliary positioning member (e.g., the clip) of the glass run portion to undesirably increase the number of parts inclusive and the assembly steps.

### Summary of the invention

It is an object of the present invention to provide an automotive door glass run which has none of the aforementioned defects of the prior art.

This object is achieved by the characterizing part of claim 1.

According to the construction specified above, the automotive glass run of the present invention:

(a) can have a simplified profile including the insert so that it can be easily produced by the extrusion;

(b) can have its paired retaining legs snapped in a mounting rail without fail and its glass run portion (especially its glass retaining wall) assembled in position without fail while blocking the outward movement of the glass without fail, because a rigid member is disposed to extend substantially from the retaining portion of the mounting base to the glass retaining wall of the glass run portion, so that it can dispense with the auxiliary positioning member such as the clip for positioning the glass run portion, as is different from the prior art;

(c) can be assembled by a single action (or snapped) on the mounting rail of the door sash through the mounting base, while dispensing with the aforementioned auxiliary positioning member, so that the number of assembly steps can be reduced; and

(d) can allow the glass retaining wall of the glass run portion to dispense with the lips, which are to be bent inward in the prior art, so that the distance between the outer faces of the door sash and the glass can be made shorter.

### Brief description of the drawings

Fig. 1 is a perspective view showing the front door of an automobile;

Fig. 2 is a sectional view showing the assembly mode of the door glass run of the prior art;

Fig. 3 is a sectional view showing the assembly mode of a door glass run according to one embodiment of the present invention;

Fig. 4 is a sectional view showing a portion of Fig. 3 immediately before the completion of the assembly of the door glass run;

Fig. 5 is a sectional view showing the assembly mode in which the glass retaining wall of the door glass run of Fig. 3 is formed with a sash shield at its root portion;

Fig. 6 is a sectional view showing the assembly mode in which an insert burying portion is made of a rigid plastics;

Fig. 7 is a sectional view showing the assembly mode in which the insert burying portion is modified; and

Fig. 8 is a sectional view showing the assembly mode in which the portion forming the engagement legs is modified.

Incidentally, Fig. 2 and Figs. 3 to 8 are sections taken along line A—A of Fig. 1, respectively.

Description of the preferred embodiments

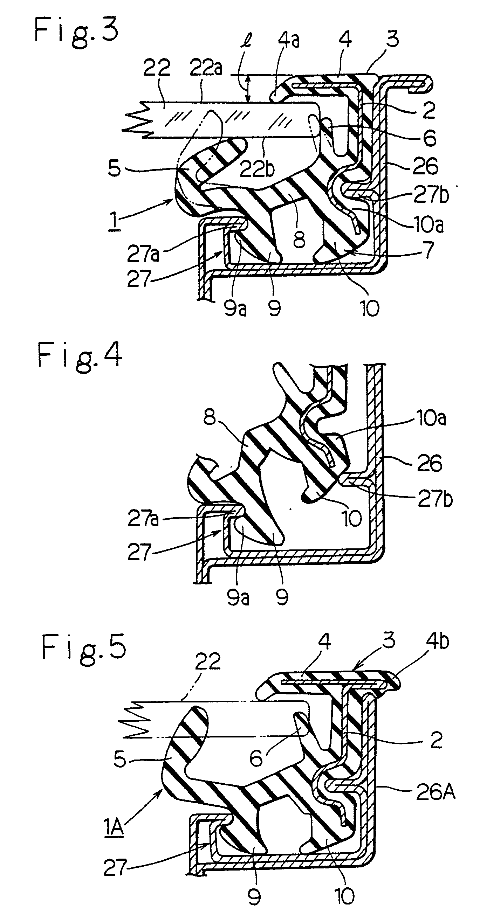

Fig. 3 is a sectional view showing the mode in which a door glass run according to one embodiment of the present invention is mounted in a door sash. A door glass run 1 has its glass run portion 3 constructed of: a glass retaining wall 4 which is formed of an outer wall; a bent lip 5 which is formed in an inner wall for pushing an inner glass face 22b; and a seal lip 6 which is formed at the root of the inner wall and forced to contact with the end face of the glass. The aforementioned glass retaining wall 4 has its leading end curved slightly inward to form a glass abutment face 4a. On the other hand, a mounting base 7 is constructed of: a bridge 8 which is formed of a portion of the inner wall of the glass run portion 3; and a pair of first and second engagement legs 9 and 10 which are formed at both the ends of the bridge 8. This bridge 8 is made so elastically deflectable as to bring the first and second engagement legs 9 and 10 closer to each other.

Here, the door glass run 1 is extrusion-molded of either rubber such as EPDM or CR or a high-molecular elastic material such as a thermo-plastic elastomer, e.g., PVC or polyester. During this extrusion molding, an insert 12 is buried continuously from that engagement shoulder (or an engagement portion) 10a of the second engagement leg 10, which is positioned close to the outside of the glass end portion, to a portion near the leading end of the glass retaining wall 4 thereby to provide a substantially continuous rigid member.

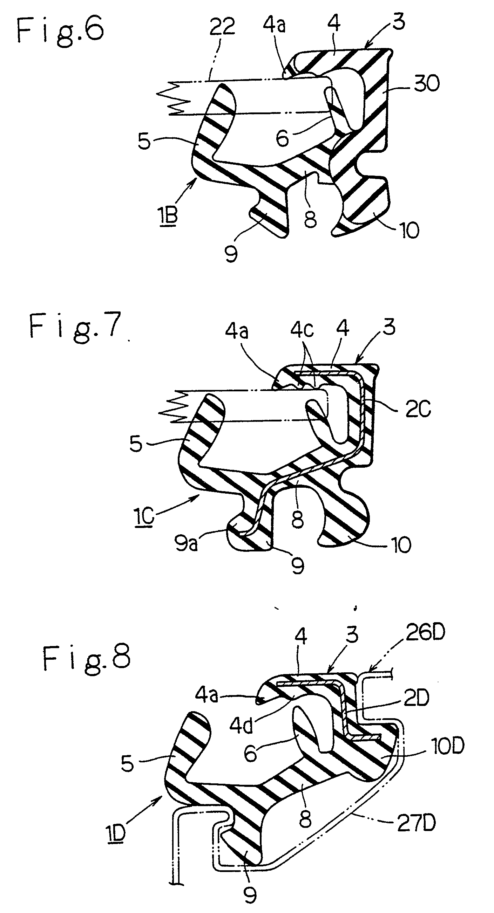

A door glass run 1A shown in Fig. 5 is modified from that of Fig. 3 such that the glass retaining wall 4 has its fixed end extending to form a sash shield 4b.

A door glass run 1B shown in Fig. 6 is modified from that of Fig. 3 such that an insert-burying portion is made of a rigid plastics (i.e., a rigid member) 30. From the sealing standpoint, the leading end and root of the glass retaining wall 4 and the leading end of the second retaining leg 10 are made of a high-molecular elastic material making up the body.

A door glass run 1C shown in Fig. 7 is modified from that of Fig. 3 such that the portion of burying an insert 4C extends from an engagement shoulder (i.e., an engagement portion) 9a of the first engagement leg 9 to a portion near the leading end of the glass retaining wall 4. In the shown embodiment, moreover, the glass retaining wall 4 is formed inside of its leading end with two ridges of glass sliding ribs 4c and 4c.

A door glass run 1D shown in Fig. 8 is modified from that of Fig. 3 such that a portion of forming a second engagement leg 10D is located close to the fixed end of the inner wall of the glass run portion 3 and made to project from the bottom of the glass run portion 3. In this embodiment, an insert 2D is made shorter than that of Fig. 3 but has no U-shaped curved portion for the retention so that its shape can be so simplified as to have an advantage in the extrusion-molding process. In the shown embodiment, the leading end of the glass retaining wall 4 is thickened at its inner side to form a glass sliding portion 4d.

The door glass run according to the present invention should not be limited to the embodiments thus far described. For example, the number of the bent lips for pushing the inner glass face can be increased to a plurality, and the seal lip forced into contact with the glass end face may be dispensed with in case a sufficient seal can be attained by the glass sliding (or abutment) face of the glass retaining wall.

Next, the using modes of the aforementioned respective embodiments will be explained in the following by taking up the door glass run of Fig. 3 as an example.

Here, the door sash 26 is angled to have such surfaces as face the end and inner faces of the door glass 22 and is equipped with a mounting rail 27 which has its bottom facing the inner face of the door glass and both its sides formed with stopper (or retaining) flanges 27a and 27b.

In the assembly mode of the door glass run 1, as shown in Fig. 4, the engagement shoulder 9a of the first engagement leg 9 is so assembled and inserted as to engage with the stopper flange 27a of the mounting rail 27. Then, the second engagement leg 10 is driven into the mounting rail 27 while forcibly bending the bridge 8. When released, the bridge 8 elastically return, and the engagement shoulder 10a of the second engagement leg 10 also comes into engagement with the stopper flange 27b of the mounting rail 27. Then, the door glass run 1 does not come out from the mounting rail 27 in the least even with an ordinary external force. At this time, the engagement legs 9 and 10 of the mountingr base 7 are snapped into engagement with the stopper flanges 27a and 27b of the mounting rail 27, and the insert 2 is buried in from the engagement shoulder 19a of the engagement leg 10 to a portion near the leading end of the glass retaining wall 4 so that the door glass run 1 is retained substantially through the flange 27b of the mounting rail 27 and the rigid member. As a result, without the auxiliary positioning member, as is different from the prior art, the door glass run 1 comes into a predetermined position without fail, when it is assembled, so that it can block the shift of the glass to the outside without any difficulty even if the external force such as the suction is exerted upon the glass during the high-speed run of the automobile.

Thus, the portion 3 of the door glass run 1, which is assembled with the door sash 26, holds the door glass 22 while sliding on the glass when the glass is moved up or down and performs the sealing action when the door glass 22 is closed. At this time, the bent lip 5 acts mainly to push the door glass 22 outside of the automobile, whereas the glass retaining wall 4 acts mainly to block the movement of the door glass 22 to the outside. Incidentally, the engagement legs 9 and 10 of the mounting base 7 have their leading ends shaped into such lips that they can abut against the bottom face of the mounting rail 27 to effect the sealing action.

The using modes of the respective embodiments (of the door glass run) shown in Figs. 5 to 8 are substantially the same as that of Fig. 3, excepting the following points.

In the embodiment of Fig. 5, the end face of the door sash 26A is covered with the sash shield 4b of the glass retaining wall 4 to leave no boundary with the sash so that the design can be improved.

In the embodiment of Fig. 6, the door glass run 1B has its molding workability improved and its weight reduced because it uses no insert (usually of metal) although it has to be subjected to a two-color extrusion.

In the embodiments of Figs. 7 and 8, the sealing property and the glass retaining performance are improved because the number of the sliding contact portions is increased.

## Claims

1. An automotive door glass run (1, 1A, 1B, 1C, 1D, 11), comprising:
a glass run portion (3, 13) having its outer wall exposed, when the door glass run is mounted in a door sash (21, 26, 26A), to the outside into a position generally flush with the outer surface of the door, and a mounting base (7, 17) formed inside of said glass run portion (3),
said glass run portion (3) including a glass retaining wall (4) formed to the outer wall of said glass run portion; and a bent lip (5) formed in an inner wall of said glass run portion for pushing the inner face of the door glass (22),
a rigid member (2, 2C, 2D, 30) being disposed to extend from the mounting base (7) to the near portion of the leading end of said glass retaining wall (4), characterized in that
said mounting base (7, 17) including an elastically deflectable bridge (8) formed of a portion of the inner wall of said glass run portion (3), and a pair of first and second engagement legs (9, 10, 10D) formed at both the ends of said bridge, and
said rigid member (2, 2C, 2D, 30) being disposed to extend from the engagement portion of either of said first and second engagement legs (9, 10, 10D) to the rear portions of the leading end of said glass retaining wall (4).

2. An automotive door glass run according to Claim 1, wherein said rigid member includes an insert (2) buried.

3. An automotive door glass run according to Claim 1, wherein said rigid member (30) is made of a rigid plastics.

4. An automotive door glass run according to Claim 1, wherein said glass retaining wall (4) has its fixed side extending to said door sash to form a sash shield (4b).

5. An automotive door glass run according to Claim 1, wherein the engagement leg (10D) positioned close to the outside of the end portion of said door glass is formed close to the fixed end of the inner wall of said glass run portion (3) and projects from the bottom of said glass run portion (3).

## Patentansprüche

1. Türfensterführung (1, 1A, 1B, 1C, 1D, 11) für ein Kraftfahrzeug mit
einem Fensterführungsabschnitt (3, 13), dessen äußere Wandung dann, wenn die Türfensterführung in einen Türfensterrahmen (21, 26, 26A) eingebaut ist, nach außen hin in einer im wesentlichen mit der äußeren Oberfläche der Tür fluchtenden Lage angeordnet ist, und einem innerhalb dem Fensterführungsabschnitt (3) ausgebildeten Einbauabschnitt (7, 17),
wobei der Fensterführungsabschnitt (3) eine an der äußeren Wandung des Fensterführungsabschnitts ausgebildete Fensterstützwandung (4) hat, sowie eine gebogene Lippe (5), die an einer inneren Wandung des Fensterführungsabschnitts ausgebildet ist, um gegen die innere Fläche der Fensterscheibe (22) zu drücken,
einem starren Bauteil (2, 2C, 2D, 30), das derart angeordnet ist, daß es sich von dem Einbauabschnitt (7) bis zu einem Abschnitt nahe dem vorderen Ende der Fensterstützwandung (4) erstreckt, dadurch gekennzeichnet, daß
der Einbauabschnitt (7, 17) einen elastisch verformbaren, an einem Abschnitt der inneren Wandung des Fensterführungsabschnitts (3) ausgebildeten Steg (8) und einen ersten und zweiten Eingriffsarm (9, 10, 10D) hat, die an den beiden Enden des Stegs ausgebildet sind, und
daß das starre Bauteil (2, 2C, 2D, 30) derart angeordnet ist, daß es sich von dem Eingriffsabschnitt des ersten oder des zweiten Eingriffsarms (9, 10, 10D) zu den Abschnitten nahe dem vorderen Ende der Fensterstützwandung (4) erstreckt.

2. Türfensterführung für ein Kraftfahrzeug nach Anspruch 1, wobei das starre Bauteil ein Einlegeteil (2) beinhaltet.

3. Türfensterführung für ein Kraftfahrzeug nach Anspruch 1, wobei das starre Bauteil (30) aus hartem Kunststoff hergestellt ist.

4. Türfensterführung für ein Kraftfahrzeug nach Anspruch 1, wobei sich der festgelegte Abschnitt der Fensterstützwandung (4) bis zu dem Türrahmen erstreckt, um einen Rahmenschutz (4b) zu bilden.

5. Türfensterführung für ein Kraftfahrzeug nach Anspruch 1, wobei derjenige Eingriffsarm (10D), der nahe der Außenseite des Endabschnitts des Türfensters angeordnet ist, nahe an dem festgelegten Ende der inneren Wandung der Türfensterführung (3) ausgebildet ist und aus der Unterseite der Türfensterführung (3) herausragt.

## Revendications

1. Un guide de vitre de portière d'automobile (1, 1A, 1B, 1C, 1D, 11) comprenant:
une partie de guide de vitre (3, 13) dont la paroi externe est non recouverte, quand le guide de vitre de portière (1) est monté dans un cadre de portière (24, 26, 26A), vers l'extérieur dans une position affleurant d'une manière générale la surface extérieure de la portière, et une base de montage (7, 17) formée à l'intérieur de ladite partie de guide de vitre (3),

ladite partie de guide de vitre (3) comprenant une paroi de retenue de vitre (4) formée sur la paroi externe de ladite partie de guide de vitre; et une lèvre recourbée (5) formée dans une paroi interne de ladite partie de guide de vitre pour repousser la face interne de la vitre de portière (22),

un organe rigide (2, 2C, 2D, 30) étant disposé pour s'étendre de la base de montage (7) à la partie proche de l'extrémité de tête de ladite paroi de retenue de vitre (4), caractérisé en ce que ladite base de montage (7, 17) comprend un ont (8) pouvant être déformé de façon élastique et formé d'une partie de la paroi interne de ladite partie de guide de vitre (3), et une paire de première et seconde pattes de contact (9, 10, 10D) formées aux deux extrémités dudit pont, et en ce que ledit organe rigide (2, 2C, 2D, 30) est disposé pour s'étendre depuis la partie de contact de l'une et l'autre desdites première et seconde pattes de contact (9, 10, 10D) jusqu'aux parties arrière de l'extrémité de tête de ladite paroi de retenue de la vitre (4).

2. Un guide de vitre de portière d'automobile selon la revendication 1, dans lequel ledit élément rigide comprend un insert noyé (2).

3. Un guide de vitre de portière d'automobile selon la revendication 1, dans lequel ledit élément rigide (30) est en matière plastique rigide.

4. Un guide de vitre de portière d'automobile selon la revendication 1, dans lequel le côté fixe de ladite paroi de retenue de vitre (4) s'étend jusqu'audit cadre de porte pour former une gaine de cadre (4b).

5. Un guide de vitre de portière d'automobile selon la revendication 1, dans lequel la patte de contact (10D) positionnée près de l'extérieur de la partie d'extrémité de ladite vitre de portière est formée à proximité de l'extrémité fixe de la paroi interne de ladite partie de guide de vitre (3) et fait saillie à partir du fond de ladite partie de guide de vitre (3).

# Fig.1

# Fig.2
## - PRIOR ART -

Fig.3

Fig.4

Fig.5

Fig.6

Fig.7.

Fig.8